# EUROPÄISCHE PATENTANMELDUNG

(11) **EP 0 978 640 A2**
(43) Veröffentlichungstag der Anmeldung: **09.02.2000**
(21) Anmeldenummer: 99111845.6
(22) Anmeldetag: 19.06.1999
(51) Int. Cl.: F01N 7/00

(54) **Verfahren zur simulierten Bildung eines die momentane Katalysatortemperatur repräsentierenden Signals**

(30) Priorität: 07.08.1998 DE 19835748
(71) Anmelder: DaimlerChrysler AG, 70567 Stuttgart (DE)
(72) Erfinder: Boll, Wolf, Dr., 71384 Weinstadt (DE)

(57) **Zusammenfassung**

Die Erfindung bezieht sich auf ein Verfahren zur simulierten Bildung eines die momentane Katalysatortemperatur repräsentierenden Signals einer Einrichtung mit einem Verbrennungsmotor. Dabei ist der Verbrennungsmotor durch ein elektronisches Steuergerät in Abhängigkeit von der Last, der Motordrehzahl und weiterer Betriebskenngrößen ansteuerbar. Dem Verbrennungsmotor ist über einen Ansaugkanal Luft zuführbar, wohingegen die Abgase vom Verbrennungsmotor über einen Abgaskanal abführbar sind, in dem ein Katalysator angeordnet ist. Mittels eines einen Kühlmittelumlauf aufweisenden Kühlers ist der Verbrennungsmotor kühlbar. Durch Sensoren werden die Kühlmitteltemperatur, die Luftaußentemperatur, die Last und die Motordrehzahl erfaßt und entsprechende Signale einem elektronischen Steuergerät zugeleitet. Von dem elektronischen Steuergerät werden aus den Größen der Last und der Motordrehzahl rechnerisch der Abgasstrom und die Abgastemperatur über der Zeit ermittelt. Von dem elektronischen Steuergerät wird aus den erfaßten und ermittelten Größen sowie der im elektronischen Steuergerät gespeicherten Größe eines Startwertes der Katalysatortemperatur rechnerisch die momentane Katalysatortemperatur ermittelt.

## Beschreibung

Die Erfindung betrifft ein Verfahren zur simulierten Bildung eines die momentane Katalysatortemperatur repräsentierenden Signals einer Einrichtung mit einem Verbrennungsmotor der im Oberbegriff des Anspruchs 1 angegebenen Gattung.

Beim Kaltstart emittieren Verbrennungsmotoren den weitaus größten Anteil an Schadstoffemissionen. Zur Minderung der Schadstoffemissionen sowie zur Verkürzung der Warmlaufzeit sind verschiedene Verfahren bekannt. Von vorrangiger Bedeutung ist hierbei das frühzeitige Erreichen der sogenannten Anspringtemperatur des Katalysators.

Die Steuerung des motorischen Gesamtprozesses, der aus einer Kaltstartanreicherung, einer Lufteinblasung in den Abgaskrümmer und einer verstärkten Abgasrückführung, einer Leerlaufanhebung sowie gegebenenfalls weiterer Maßnahmen im Abgastrakt besteht, sollte sinnvollerweise auch unter Berücksichtigung der tatsächlichen momentanen Katalysatortemperatur erfolgen. Solche weiteren Maßnahmen können eine Zwischenschaltung von Vorkatalysatoren, ein Heizkatalysator, eine HC-Falle, eine Umsteuerung der Durchflußrichtung von Schalldämpfer und Katalysator sowie eine Gegendruckerhöhung durch eine Schaltdrossel sein.

Eine Messung der Katalysatortemperatur mittels Sensoren ist aufwendig und teuer, wobei zusätzlich das Problem der nicht ausreichenden Lebensdauer der bekannten Sensoren kommt.

Aus der DE 43 38 342 A1 ist ein Verfahren nach dem Oberbegriff des Anspruchs 1 bekannt. Zur Simulation der momentanen Katalysator-Temperatur werden einem zentralen Steuergerät die Betriebskenngrößen der im Ansaugkanal zugeführten Luftmasse, des Öffnungswinkels der Drosselklappe, der Temperatur des Verbrennungsmotors, der Drehzahl des Verbrennungsmotors, eines ersten Abgaswertes vor dem Katalysator sowie eines zweiten Abgaswertes hinter dem Katalysator zugeführt und daraus die momentane Katalysatortemperatur gebildet. Dieses Verfahren erfordert eine hohe Anzahl an Sensoren und ist somit aufwendig und teuer.

Der Erfindung liegt daher die Aufgabe zugrunde, ein Verfahren der im Oberbegriff des Anspruchs 1 genannten Art zu schaffen, das bei einfachem Aufbau der Einrichtung im Normalbetrieb des Kraftfahrzeugs insbesondere während der Warmlaufphase des Verbrennungsmotors zu einer einfachen und sicheren Ermittlung der jeweils tatsächlichen Katalysatortemperatur führt.

Diese Aufgabe wird durch ein Verfahren mit den Merkmalen des Anspruchs 1 gelöst.

Dieses erfindungsgemäße Verfahren erfordert nur wenige einfache Sensoren hoher Lebensdauer, so daß die dazu erforderliche Einrichtung einen einfachen und kostengünstigen Aufbau besitzt. Da durch das Verfahren schnell die tatsächliche momentane Katalysatortemperatur ermittelt und der Motorsteuerelektronik zugeleitet wird, können die Schadstoffemissionen des Verbrennungsmotors, insbesondere während der Warmlaufphase des Verbrennungsmotors und des Katalysators deutlich vermindert werden.

Dieses Verfahren vermindert aber nicht nur die Schadstoffemissionen im alltäglichen Fahrbetrieb, sondern reduziert auch den Kraftstoffverbrauch, da die Warmlaufprozeduren nur so lange durchgeführt werden, bis der Katalysator seine Starttemperatur erreicht hat. Das Motorwarmlaufprogramm kann somit in der Weise optimiert werden, daß nur noch Rundlauf und Lastannahme garantiert sein müssen. Darüber hinaus wird der Kraftstoffverbrauch dadurch minimiert, daß die Leerlaufdrehzahl des Motors und gegebenenfalls die Schaltdrehzahlen bei Automatikgetrieben reduziert werden. Der bisherige Kaltlaufschaltruck wird vermieden.

Je nach Betriebsfall werden auch die Gemischanreicherung sowie die Lufteinblasung in den Abgaskrümmer, welche zu einer Belastung des elektrischen Bordnetzes im ohnehin kritischen Winterkaltstart führen, beträchtlich reduziert.

Um auf einfache Weise den Startwert der Katalysatortemperatur zu bilden, kann nach einem Abschalten des Verbrennungsmotors die Ermittlung der momentanen Katalysatortemperatur so lange fortgesetzt werden, bis die ermittelte momentane Katalysatortemperatur etwa der erfaßten Umgebungstemperatur entspricht und als neuer Startwert der Katalysatortemperatur in dem elektronischen Steuergerät gespeichert wird.

Zu einfachem Aufbau geringer Baugröße und Vermeidung elektromagnetischer Störungen des vom elektronischen Steuergerät einem elektronischen Motorsteuergerät zugeleiteten Signals der momentanen Katalysatortemperatur kann das elektronische Steuergerät ein Teil des elektronischen Motorsteuergeräts sein. Die Größe der Last wird mit einfachen Mitteln durch einen Öffnungswinkelsensor einer Drosselklappe im Ansaugkanal oder durch einen Stellungsgeber eines Fahrpedals erfaßt.

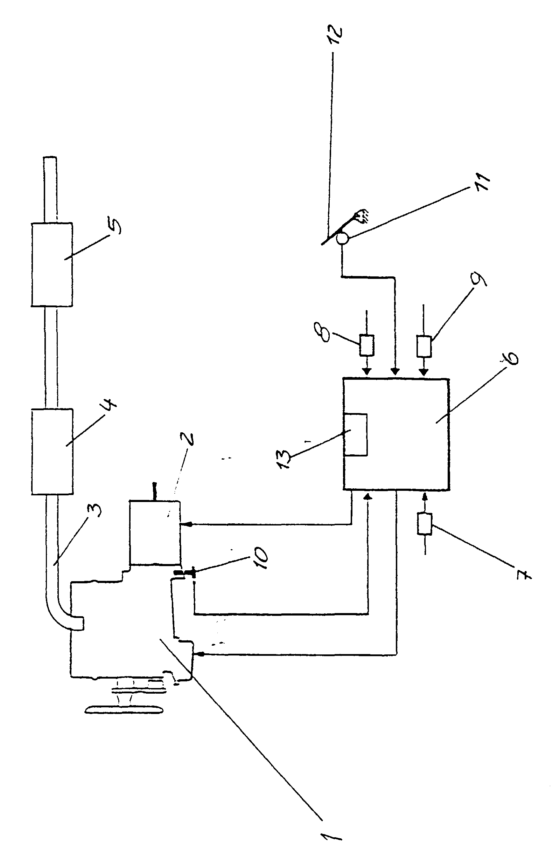

Ein Ausführungsbeispiel der Erfindung ist in der Zeichnung dargestellt und wird im Folgenden näher beschrieben.

Die einzige Figur der Zeichnung zeigt eine Prinzipskizze einer Einrichtung mit einer Brennkraftmaschine, die durch ein elektronisches Steuergerät ansteuerbar ist.

Die dargestellte Einrichtung weist einen Verbrennungsmotor 1 für ein Kraftfahrzeug auf, an dem ein Automatikgetriebe 2 angeordnet ist. Die Abgase des Verbrennungsmotors 1 werden über einen Abgaskanal 3 abgeführt, in dem in Strömungsrichtung hintereinander ein Katalysator 4 und ein Schalldämpfer 5 angeordnet sind. Zur Regelung des Verbrennungsmotors 1 und des Automatikgetriebes 2 ist ein elektronisches Motorsteuergerät 6 vorhanden, welches von Sensoren 7 bis 10 Informationen über Betriebskenngrößen des Kraftfahrzeugs erhält, wobei ein Sensor ein Motordrehzahlsenosor 10 ist.

Ein weiterer Sensor ist ein Kühlmitteltemperatursensor 7, durch den die jeweilige Temperatur des Kühlmittels eines nicht dargestellten Motorkühlers erfaßt wird. Der Sensor 8 ist ein Luftaußentemperatursensor 8. Weiterhin erhält das elektronische Motorsteuergerät 6 von einem Stellungsgeber 11 eines Fahrpedals 12 ein von der Stellung des Fahrpedals 12 abhängiges Signal.

Abhängig von den durch die Sensoren 7 bis 10 erfaßten Meßwerten und der Stellung des Fahrpedals 12 werden durch das elektronische Steuergerät 6 Ansteuersignale für den Verbrennungsmotor 1 und das Automatikgetriebe 2 erzeugt und der Betrieb des Verbrennungsmotors 1 geregelt, sowie das Automatikgetriebe angesteuert.

Integriert in das elektronische Motorsteuergerät 6 ist ein elektronisches Steuergerät 13 angeordnet, dem ebenfalls die Signale der Sensoren 7 bis 11 zugeführt werden und dessen Ausgangssignal ein in dem elektronischen Steuergerät 13 gebildetes, die momentane Katalysatortemperatur repräsentierendes Signal ist, welches dem elektronischen Motorsteuergerät 6 als weiteres Signal zur Regelung des Betriebs des Verbrennungsmotors zugeleitet wird.

Im Falle des Bedarfs sehr genauer Katalysatortemperaturen kann im thermisch geringer belasteten Bereich, z.B. stromab des Schalldämpfers eine Temperaturmeßstelle vorgesehen sein (im Bild nicht dargestellt), die ein Abgleichsignal an das Steuergerät 13 liefern kann, welches weitere rechnerische Rückschlüsse auf die tatsächliche Katalysatortemperatur ermöglicht.

## Patentansprüche

1. Verfahren zur simulierten Bildung eines die momentane Katalysatortemperatur repräsentierendes Signals einer Einrichtung mit einem Verbrennungsmotor (1), der durch ein elektronisches Motorsteuergerät (6) in Abhängigkeit von der Last, der Motordrehzahl und weiterer Betriebskenngrößen ansteuerbar ist, dem über einen Ansaugkanal Luft zuführbar ist und dessen Abgase über einen Abgaskanal (3) abführbar sind, in dem ein Katalysator (4) angeordnet ist und der Verbrennungsmotor (1) mittels eines einen Kühlmittelumlauf aufweisenden Kühlers kühlbar ist,
dadurch gekennzeichnet, daß durch Sensoren (7 bis 11) die Kühlmitteltemperatur, die Luftaußentemperatur, die Last und die Motordrehzahl erfaßt und entsprechende Signale einem elektronischen Steuergerät (13) zugeleitet werden, das von dem elektronischen Steuergerät (13) aus den Größen der Last und der Motordrehzahl rechnerisch oder aus in einem Speicher des elektronischen Steuergerätes abgelegten Kennfeldern der Abgasstrom und die Abgastemperatur über der Zeit ermittelt werden und daß von dem elektronischen Steuergerät (13) aus den erfaßten und ermittelten Größen sowie der im elektronischen Steuergerät (13) gespeicherten Größe eines Startwertes der Katalysatortemperatur rechnerisch oder aus in einem Speicher des elektronischen Steuergerätes (13) abgelegten Kennfeldern die momentane Katalysatortemperatur ermittelt wird.

2. Verfahren nach Anspruch 1,
dadurch gekennzeichnet, daß zur Bildung des Startwertes der Katalysatortemperatur nach einem Abschalten des Verbrennungsmotors (1) die Ermittlung der momentanen Katalysatortemperatur so lange fortgesetzt wird, bis die ermittelte momentane Katalysatortemperatur etwa der erfaßten Umgebungstemperatur entspricht und als neuer Startwert der Katalysatortemperatur in dem elektronischen Steuergerät (13) gespeichert wird.

3. Verfahren nach einem der vorhergehenden Ansprüche,
dadurch gekennzeichnet, daß die Größe der Last durch einen Öffnungswinkelsensor einer Drosselklappe im Ansaugkanal erfaßt wird.

4. Verfahren nach einem der Ansprüche 1 bis 3,
dadurch gekennzeichnet, daß die Größe der Last durch einen Stellungsgeber (11) eines Fahrpedals (12) erfaßt wird.
